# EUROPEAN PATENT SPECIFICATION

(11) **EP 2 926 057 B1**
(45) Date of publication and mention of the grant of the patent: **08.08.2018**
(21) Application number: 13799657.5
(22) Date of filing: 29.11.2013
(51) Int. Cl.: F24F 12/00, F24F 13/12, F24F 13/16

(54) **SUMMER BYPASS FOR HEAT RECOVERY UNIT**
SOMMER-BYPASS FÜR WÄRMERÜCKGEWINNUNGSANLAGE
DÉRIVATION D'ÉTÉ POUR UNITÉ DE RÉCUPÉRATION DE CHALEUR

(30) Priority: 30.11.2012 GB 201221652
(43) Date of publication of application: 07.10.2015
(73) Proprietor: Greenwood Air Management Limited, Rustington West Sussex BN16 3LF (GB)
(72) Inventor: BYNE, Daniel, Rustington Sussex BN16 3LF (GB); FLACK, Gordon, Rustington Sussex BN16 3LF (GB); RAHIMI, Darius, Rustington Susswex BN16 3LF (GB); BELLE, Mark, Rustington Sussex BN16 3LF (GB)
(74) Representative: Dehns
(86) International application number: PCT/GB2013/053168
(87) International publication number: WO 2014/083354

(56) References cited:
- WO-A1-2011/155069
- WO-A1-2012/004978
- WO-A2-2012/011865
- DE-U1-202010 008 740
- US-A- 5 337 574
- US-A1- 2007 190 927

## Description

The invention relates to heat exchangers or heat recovery units used in ventilation systems. In particular, the invention relates to a summer bypass arrangement for such heat recovery units.

Heat exchangers are used in many technologies for transferring heat between two fluid flows. The present invention relates more specifically to gas heat exchangers where heat is exchanged between two different gas flows.

Ventilation systems can either be balanced or unbalanced. In an unbalanced system, air is extracted from a building (typically certain areas of the building such as kitchens and bathrooms) and is expelled to the outside in order to get rid of unwanted moisture and/or odours. The system relies on the extracted air being replaced naturally by air flowing into the building through natural openings, such as through window vents, or under doors. This system works well in older "leakier" buildings where there are plenty of natural openings through which air can enter or leave the building.

However in more modern buildings improved seals tend to be employed around windows and doors in order to improve the thermal efficiency of the building and reduce the amount of warm air escaping from within the building. In such cases, a balanced ventilation system may be more appropriate. A balanced ventilation system does not just extract air from the building and exhaust it to the outside, but also draws replacement air into the building, thus maintaining the air pressure within the building. Such systems therefore have one flow path for air coming into the building and another flow path for air being expelled from the building. The air being drawn in from outside is typically colder than the air being expelled and therefore, for improved thermal efficiency, a heat exchanger can be employed to transfer some of the heat from the outgoing air flow into the incoming air flow.

In normal operation, air within the building is heated to a desired temperature via normal heating systems and the heat recovery unit (comprising the heat exchanger and various controls) then aims to minimise heat losses in the exhausted air by using it to heat up the incoming cold air, thus reducing load on (and energy usage of) the heating system. It will be appreciated that the system can also be used in warm conditions where the inside air is cooled to a temperature below the outside temperature and the heat exchanger operates by using the cold outgoing air to cool down the warm incoming air, again improving thermal efficiency and reducing load on the cooling system.

However, not all buildings have air conditioning or other air cooling facilities. During warm conditions, this can lead to the heat exchanger working the wrong way. For example, when the outside temperature is above the inside temperature, the heat exchanger will initially act to cool the incoming air by heat exchanging with the outgoing air. However, as the heat exchanger is not 100% efficient, the inside temperature gradually rises to equalise with the outside temperature. If there is then any heating within the house (e.g. sunlight streaming through a window and causing a local heating effect), the air temperature within the house will rise above that of the outside air. The incoming outside air is then further heated by the outgoing inside air (as per normal operation in cold weather), causing further heating within the house. In such warm conditions, the heat exchanger works against the desires of the building's occupants. For this reason, heat recovery units are typically fitted with a summer bypass mechanism whereby when certain conditions are met one of the airstreams is switched to bypass the heat exchanger so as to prevent any further heat exchange. Either the incoming or outgoing airstream can be bypassed in this manner. With no heat exchange taking place, the warmer air within the house is simply replaced with cooler air from outside and the temperatures should equalise.

US 5337574 describes an air conditioning unit in which main and bypass streams of inlet air are controlled such that their flow rates are inversely proportional and the main stream is heated by a heat exchanger.

DE 20 2010 008740 discloses an air conditioner upon which the preamble of appending claim 1 is based.

According to the invention there is provided a heat recovery ventilation unit comprising a first air flow path and a second air flow path and a heat exchanger in which the first air flow path is in heat exchange contact with the second air flow path; the unit further comprising an air flow path selector in the first air flow path which is arranged to select between the first air flow path and a third air flow path which bypasses the heat exchanger; wherein the air flow path selector is located between an inlet filter of the first air flow path and the heat exchanger; characterised in that the air flow path selector comprises a barrier which is movable between a first configuration in which air is directed to the heat exchanger and a second configuration in which air is directed to bypass the heat exchanger, and in that the barrier is operable to slide between the first configuration and the second configuration .

Existing heat recovery units have typically installed the summer bypass diverter (selector) outside the air filter so that when the diverter is in the summer bypass mode, the diverted airflow does not pass through the filter. If it is the outgoing airstream that is diverted, and thus unfiltered, the lack of filtration may be of less concern. However many heat recovery units are now designed to be reversible in some fashion so that the two flow paths within the unit can be allocated to incoming/outgoing airstreams at the point of installation, thus allowing greater flexibility to the installer. With such devices, if only a single summer bypass is provided on one of the airflow paths, that path may be allocated to the incoming airstream when the unit is installed. However the incoming airstream is then not filtered and particulate matter such as dust or pollen enters the building rather than being filtered out.

By providing the summer bypass diversion (i.e. the place in the flow path where the air is redirected so that it does not pass through the heat exchanger) after the filter, the quality of air within the building is maintained in all conditions and regardless of which flow path is allocated to be incoming air upon installation.

The heat recovery units are typically designed for installation in a relatively small space such as a kitchen cupboard. They are therefore designed to be as small and compact as possible. The air filters are typically positioned quite close to the heat exchanger and therefore once air has passed through the filter it is within a much more constrained space where there is little room for creating alternative flow paths which could be used to create a bypass flow path.

Due to a combination of the cost and simplicity of manufacturing and the insulation properties, heat recovery units have typically been made from foam materials such as expanded polystyrene (EPS). However the molding process for such materials has two important consequences. Firstly it limits the minimum thickness of the components to about 10 mm, i.e. no piece can be less than about 10 mm thick. Secondly it is difficult or impossible to mold complex shapes. This provides certain limitations on the interior of the unit. With these limitations, the potential airflow paths within the unit are restricted. Particularly in smaller units with less interior volume inside the unit, complex airflow paths cannot be created.

Preferably the interior components of the heat recovery unit are formed from plastic rather than foam. Plastic can be molded into more intricate shapes and is much thinner than the foam. Plastic can be injection molded to 1.6 mm. Therefore by using plastic, more space is created inside the unit without making the unit any larger. Also, as more intricate shapes can be molded, a more complex path becomes viable, e.g. with tighter curves . This allows an alternative flow path to be routed through the unit without increasing the size of the unit or reducing the size of the heat exchanger. It also allows a flow path to be formed on the filtered side of the filter. Preferably therefore the heat recovery unit comprises structures formed from plastic which form the third air flow path. Preferably the plastic structures are less than 5 mm thick, more preferably less than 3 mm thick and most preferably less than 2 mm thick.

Some foam panel may still be used in key areas for thermal efficiency, e.g. on the insides of some external panels or inside the unit to isolate airflows of different temperatures as the thermal insulation characteristics of plastic are not as good as foam. However the use of foam is avoided in areas which form the third air flow path which bypasses the heat exchanger.

It should be noted that the filter cannot simply be moved closer to the inlet port without reducing efficiency. If the filter were placed adjacent to the inlet port then only a small area of the filter equal to the area of the inlet port would actually be used. By contrast, positioning the filter away from the inlet port allows the air from the inlet port to expand and disperse inside the unit, thus making better use of the filter. This arrangement provides less air resistance and reduces the pressure drop across the filter. It is therefore preferred that the filter be spaced from the air inlet port so as to allow the incoming airflow to disperse before passing through the filter. The airflow path selector may be any suitable mechanism for opening and closing the two airflow paths. The mechanism could use two independent shutters, linked to the same or different controls, but preferably a single shutter is used which opens one path while closing the other path and vice versa. Louvers are an example of one kind of shutter. As the louvers are rotated through 90 degrees, they open and close the gaps between them, thus opening and closing one airflow path. One of the end louvers could be positioned in a wall perpendicular to that airflow path so that when the end louver is parallel to the wall (allowing air flow through the first airflow path) it closes off an opening in the wall leading to an alternative (bypass) airflow path. When the louvers are rotated to close the first airflow path, this alternative airflow path would then be opened. However it is preferred not to use louvers as they add resistance to air passing through (between) them.

It is preferred to use a barrier which is moved out of the way so as to open one path and close the other.

A single rotating barrier, rotatable about one edge to move between its first and second configurations so that it selects between closing different airflow paths, would avoid the air resistance problem of using multiple louvers, but it would not be particularly space efficient as the barrier must be large enough to block the larger of the two airflow paths and also must be given room to rotate between its two positions.

A slidable barrier can avoid the need for swinging room which would be required by a rotatable barrier. If the two airflow paths are located adjacent to one another and are of the same cross-sectional size/shape then a slidable barrier can provide an efficient solution. If the two airflow paths are adjacent, but not in the same direction a bendable barrier (e.g. a sectioned barrier) may be used to slide along bent tracks so that the barrier moves from being in front of (blocking) one path to being in front of (blocking) the other path.

However the airflow paths may not be of the same dimension, the summer bypass path not having resistance caused by the heat exchanger and therefore not needing to be of such great diameter. As space is a concern with heat recovery units, as described above, an efficient barrier solution is required in situations where there is such a discrepancy in opening size of the two alternative flow paths.

Preferably therefore the barrier is a foldable barrier and one of the first and second configurations is the folded state of the foldable barrier and the other of the first and second configurations is the unfolded state of the foldable barrier. In particularly preferred embodiments the first configuration (blocking the bypass path while allowing airflow to the heat exchanger) is the folded configuration and the second configuration (blocking airflow to the heat exchanger while allowing airflow through the bypass path) is the unfolded configuration. As discussed above, the bypass channel will tend to be of smaller dimensions than the heat exchanger channel and so can be blocked off with a smaller barrier, i.e. a folded configuration of the barrier may be used to block the heat exchanger channel. This provides highly efficient usage of space as the unit does not need to be configured to accommodate unused parts of the barrier which are not required to cover the relevant opening of the bypass channel.

In some preferred embodiments the foldable barrier comprises a first section, a second section and a third section, the first section being foldably connected to the second section and the second section being foldably connected to the third section, and wherein in the folded configuration the fold between the first section and the second section is substantially a right angle and the fold between the second section and the third section is substantially 180 degrees so that the second and third sections are substantially parallel.

With this configuration all three sections together form the barrier for the heat exchanger path (the first airflow path) with the barrier in a flat (unfolded) state. In the folded state, the second and third sections are folded perpendicular to the first section, with the third section folded back on the second section such that they are in an overlapping relationship. The second and third sections together block the bypass path (the third airflow path).

It is particularly preferred that the first, second and third sections are all rectangular and of substantially equal size and shape. With this configuration, the area of the barrier in its folded state is equal to approximately one third of its area when unfolded. Therefore the heat exchanger flow path (first air flow path) can have a cross-sectional area around three times that of the bypass flow path (third air flow path).

In an alternative arrangement, the barrier comprises a plurality of sections, each slidable with respect to the others such that the sections are movable between an overlapped configuration and a non-overlapped configuration. In the overlapped configuration, the barrier covers a smaller cross-sectional area and is therefore preferably used to block the bypass flow path (third air flow path). In the non-overlapped configuration the barrier has a much larger cross-sectional area and is therefore preferably used to block the heat exchanger flow path (first air flow path). This arrangement is particularly beneficial if the two air flow paths are adjacent and initially directed in the same direction.

Preferably only a leading section of the barrier is driven. As the sections are moved from the overlapped configuration to the non-overlapped configuration, each of the sections (except the last) is arranged to pull an adjacent section. Thus, starting from the overlapped configuration, each section in turn slides over its adjacent section into a non-overlapped state and then pulls the next section behind it. Once the sections have all reached a non-overlapped configuration, the barrier is pulled further so that the final section is moved out of the way of the third air flow passage (bypass passage), thus opening it to air flow. Preferably the barrier comprises three sections each of approximately the same size and the third air flow passage has an opening approximately one third of the size of the opening of the first air flow passage.

It will be appreciated that in the non-overlapped configuration there may still be some small overlap between the adjacent barrier sections. The term "non-overlapped configuration" is used to refer to the overall state, being one in which the adjacent sections are substantially (or predominantly) non-overlapping.

In preferred embodiments the barrier is driven between the first and second configurations by an electric motor. Previously available heat recovery units have operated the summer bypass diverter using a wax actuator. The wax actuator changes between an actuated state and a non-actuated state through change of phase of the wax (solid to liquid and vice versa). The temperature required to melt the wax is greater than the air temperatures in question and therefore to maintain the actuator (and the barrier) in the configuration in which the wax is melted requires continual application of energy through a heating element. This is therefore an inefficient and non-eco-friendly solution. It is therefore preferred not to use a wax actuator. The use of a motor is more costly and requires more components, but means that power is only consumed as the barrier is moved from one position to the other position. No power is consumed by leaving the barrier in a given position.

In some preferred embodiments, the third path passes over the top of the heat exchanger. In other preferred embodiments the third path passes underneath the heat exchanger. The latter arrangement is more suitable in a larger heat recovery unit where there is more room underneath the heat exchanger. In smaller heat recovery units, the heat exchanger is located close to the bottom of the unit, but there is some room for a bypass airflow path in the upper section of the unit around the air inlet and outlet conduits.

Preferably the heat recovery unit is configurable such that either the first flow path or the second flow path is for incoming air. The other path is then for outgoing air. It does not matter which of the paths (incoming or outgoing) contains the bypass path as both air flow paths are filtered before entering the heat exchanger and the bypass simply avoids thermal contact in the heat exchanger.

Activation of the summer bypass can be done manually, e.g. via a manual switch or an electronic switch. However it is preferably activated and deactivated based on data received from the sensors (e.g. data on inside and outside air temperatures) and internal logic (preferably programmed into the control unit).

Although it will be appreciated that the above system has been described in terms of domestic ventilation systems (and this is the preferred application), it will be appreciated that the technology also applies to other heat exchange ventilation systems.

Preferred embodiments of the invention will now be described, by way of example only, and with reference to the accompanying drawings in which:
Fig. 1 shows a partially cut away view of a first embodiment of the invention;
Fig. 2 shows a sectional view of the first embodiment with the bypass path closed;
Fig. 3 shows a sectional view of the first embodiment with the bypass path open;
Fig. 4 shows a cut-away view of the first embodiment with the bypass path open;
Figs. 5 to 7 show a barrier mechanism of the first embodiment;
Fig. 8 shows a first view of a second embodiment with a bypass path open;
Fig. 9 shows a second view of the second embodiment with the bypass path open;
Fig. 10 shows a barrier of the second embodiment with the bypass path open; and
Fig. 11 shows the barrier of the second embodiment with the bypass path closed.

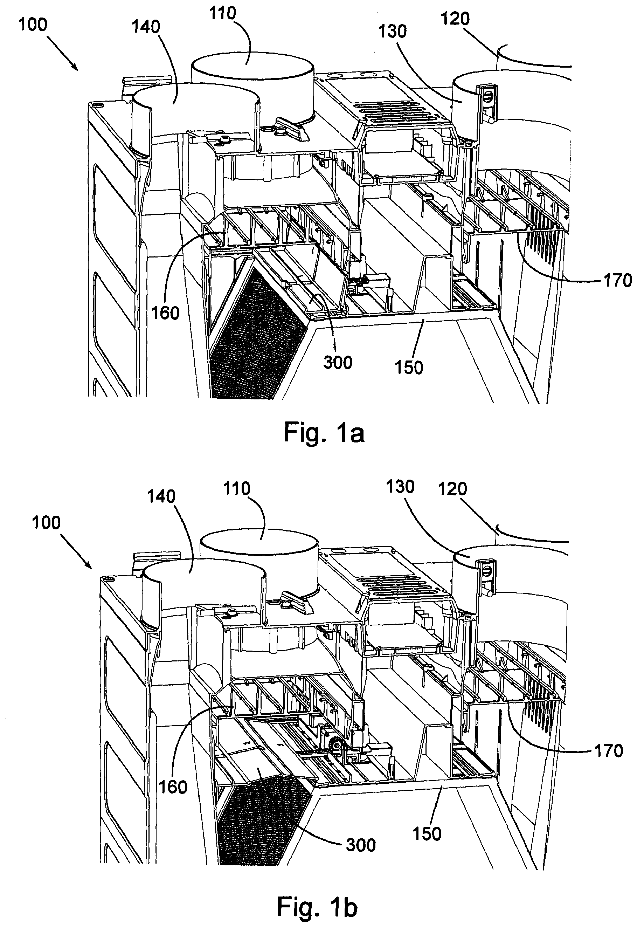

Fig. 1a shows a first embodiment of the invention. The first embodiment is a smaller sized heat recovery unit designed to fit inside a kitchen cupboard. The unit is approximately 560 mm by 550 mm by 300 mm.

The heat recovery unit 100 has two inlet ports and two outlet ports as follows: a first inlet 110, a first output 120, a second inlet 130 and a second outlet 140. Underneath first inlet 110 is a first filter 160. Underneath second inlet 130 is a second filter 170. In the middle of the unit is a heat exchanger 150.

In normal operation, as shown in Fig. 1a, a first air flow path passes through first inlet 110, then through the heat exchanger 150, then through first centrifugal fan 180 (not shown in Fig. 1a) and then through first outlet 120.

A second air flow path passes through second inlet 130, then through the heat exchanger 150, then through second centrifugal fan 190 (not shown in Fig. 1a) and then through second outlet 140.

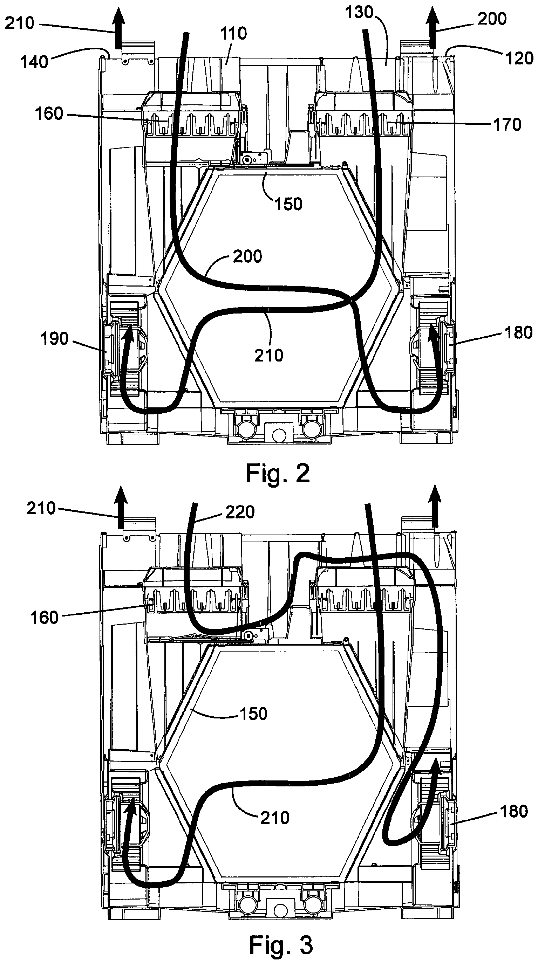

These flow paths are illustrated in Fig. 2. Arrow 200 shows the first air flow path and arrow 210 shows the second air flow path. These two flow paths are for normal operation when the two air flow paths are in heat exchange relationship, i.e. both pass through the heat exchanger where they are in heat exchange contact, but no air or moisture is exchanged. The warmer airstream transfers its heat to the colder airstream. First airstream 200 passes through first filter 160 before it reaches the heat exchanger. Second airstream 210 passes through second filter 170 before it reaches the heat exchanger.

Figs. 1b corresponds to Fig. 1a, but show the unit is summer bypass mode. Fig. 3 corresponds to Fig. 2, but shows the airflows when the unit is in summer bypass mode.

The only difference between Figs. 1a and 1b is that in Fig. 1a an air flow barrier (air flow diverter) 300 is in a folded configuration which blocks the bypass air flow path while allowing air to flow along the first air flow path through the heat exchanger. In Fig. 1b the air flow barrier 300 is in an unfolded (flat) configuration which blocks air flow in the first air flow path from passing through the heat exchanger and instead redirects it through the bypass flow path. The operation of the barrier 300 will be described further below.

The bypass flow path is shown in Fig. 3 and is indicated by arrow 220. The flow path of the second air flow path (through the second inlet port 130, heat exchanger 150 and second outlet port 140) is indicated by arrow 210, as in Fig. 2. This second air flow path is unaltered in the summer bypass mode.

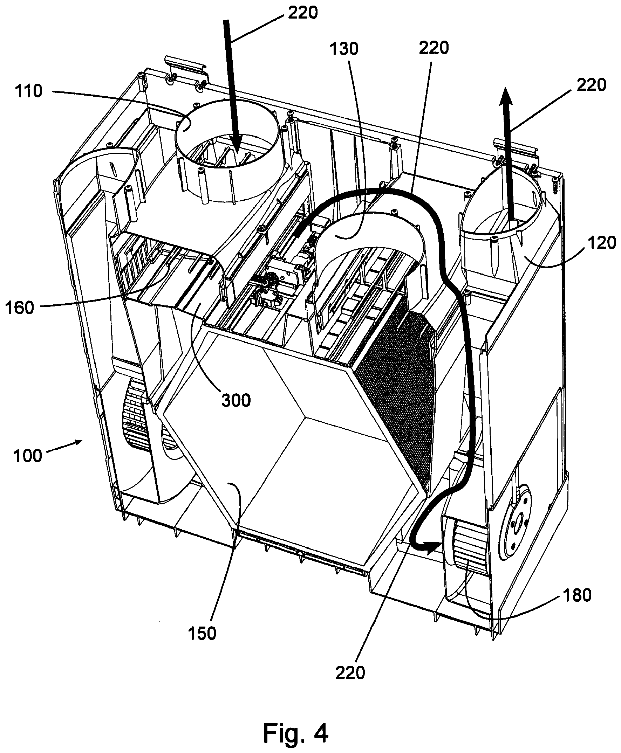

With the barrier 300 in the summer bypass configuration, air entering the first inlet is redirected around the alternative, bypass flow path 220. This path passes over the top of the heat exchanger 150, behind the second air inlet 130, between the second air inlet 130 and the first air outlet 120, and down to the bottom of the unit to the point at which air from the first inlet 110 would exit the heat exchanger 150 if the unit were in normal operation mode. This is the location of the centrifugal fan 180 which drives the air along the flow path (either the first air flow path in normal operation or the bypass path in bypass operation). The fan 180 then drives the air up and out of the first outlet 120. An alternative view of this bypass flow path is shown in Fig. 4 which is a partially cut away view of the heat recovery unit 100.

It can be seen from Figs. 3 and 4 that the bypass flow path 220 still passes through the first filter 160. This path 220 is possible largely due to manufacturing the structures of the heat recovery unit from plastics rather than from foam. As can be seen from the partial cross-sections in Figs. 1a and 1b, the structures are thin (about 1.6 mm). If these were made from foam they would be about 10 mm or greater in thickness. The path 220 would not be possible with the thicker material without making the whole unit larger. In particular, as described above, the path 220 passes over the top of the heat exchanger and around the first outlet 120 and second inlet 130. If made from foam, this area in the top of the unit 100 would be far too constricted to act as a bypass path. Also, the channel down the side of the unit towards the fan 180 would be severely constricted if the unit were made from foam rather than plastics.

Directing the bypass flow path 220 over the top of the heat exchanger 150 rather than over the front of the heat exchanger 150 means that the heat exchanger can extend the whole depth of the unit (i.e. the distance from the front face to the back face) which maximises the efficiency of the unit. In general, the larger the heat exchanger, the better the efficiency.

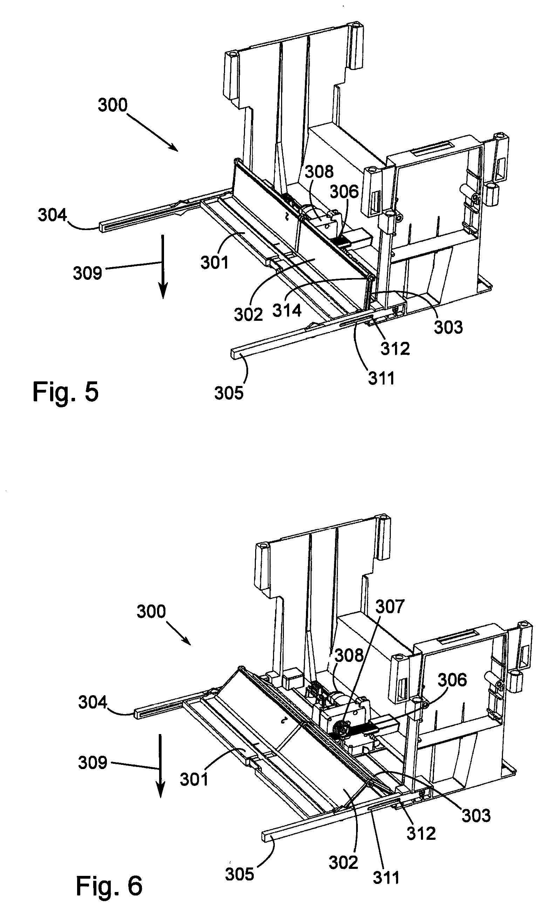

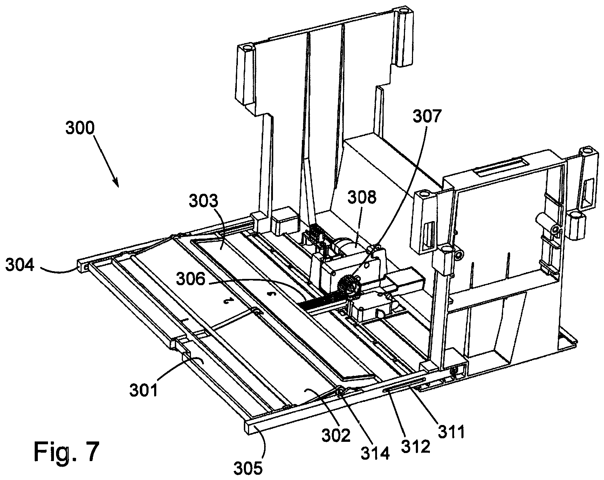

Figs. 5, 6 and 7 show the barrier 300 and illustrate its operation between its two configurations (normal and bypass). Fig. 5 shows the barrier 300 in a folded configuration for normal operation, with the bypass shut. Fig. 7 shows the barrier 300 in an unfolded configuration for bypass operation, with the normal flow path shut. Fig. 6 shows the barrier 300 in transit between the two configurations.

Barrier 300 is formed from three rectangular sections, a leading section 301, a middle section 302 and a trailing section 303. The leading section 301 is slidably mounted in guide rails 304, 305. Both the leading edge and the trailing edge of leading section 301 are mounted in the guide rails 304, 305 so that leading section 301 remains in the same orientation as it slides along the rails 304, 305. The leading edge of middle section 302 is rotatably mounted to the trailing edge of leading section 301. The trailing edge of middle section 302 is rotatably mounted to the leading edge of trailing section 303. The trailing edge of trailing section 303 is slidably mounted in the guide rails 304, 305.

The leading edge of trailing section 303 and the trailing edge of middle section 302 are not slidably mounted to the guide rails 304, 305 and are thus free to move in the direction perpendicular to that of the rails 304, 305.

Leading section 301 is attached to a drive mechanism comprising a rack 306 (to which the leading section 301 is attached) which is driven by a pinion 307 which is in turn driven by a motor and gearbox 308. The middle section 302 and trailing section 303 are not connected to the drive mechanism, but are moved merely by virtue of being connected to the leading section 301.

Operation of the barrier 300 will now be described, starting from the position shown in Fig. 5 in which the barrier is in a folded configuration. Middle section 302 and trailing section 303 are folded back on each other so that they overlap one another. In this configuration they block the entrance to the summer bypass flow path which runs from left to right in Fig. 5. Leading section 301 is parallel to the guide rails 304, 305 and is retracted as far as possible (i.e. as close as possible to the motor and gearbox 308). Middle section 302 and trailing section 303 are perpendicular to the guide rail 304, 305. The normal flow path through the heat exchanger (indicated by arrow 309 in Fig. 5) is open in this configuration.

Fig. 6 shows the barrier 300 in transit between the two configurations. Leading section 301 has been driven along guide rails 304, 305 by the motor and gearing 308 turning the pinion 307 which pushes the rack 306 (and leading section 301 connected thereto) in the direction of closing the main air flow path 309. As the leading section 301 progresses, the middle section 302 and trailing section 303 separate and start to fold towards a flattened state.

Fig. 7 shows the barrier 300 in its flattened (non-folded) state with the leading section 301 driven as far forward as possible by the motor and gearing 308, pinion 307 and rack 306. In this position, the trailing edge of trailing section 303 has also been pulled forward. The trailing edge of trailing section 303 has lugs 312 which are mounted in grooves 311 in the guide rails 304, 305. Grooves 311 define the extreme positions of the trailing edge of trailing section 303. In Fig. 7, the lugs 312 are in the extreme forward position (furthest from the motor and gearing 308), while in Figs. 5 and 6 lugs 312 are in the extreme rearward position (closest to the motor and gearing 308).

The leading edge of trailing section 303 (although it could equally be the trailing edge of middle section 302) is also provided with lugs 314 which protrude laterally over the guide rails 304, 305. These lugs 314 prevent the middle and trailing sections 302, 303 from folding completely flat as the lugs 314 cannot pass the top of the guide rails 304, 305. Retaining a slight fold in the barrier 300 in this way ensures that when the barrier 300 is moved to the folded configuration, the middle section 302 and trailing section 303 fold in the correct manner.

When the barrier 300 is fully extended in the non-folded configuration, the trailing section 303 is pulled forward in its grooves 311. This is so that the whole length of the barrier 300 is available to cover the normal air passage to the heat exchanger. When the barrier 300 is fully retracted in the folded configuration, the trailing section 303 is pushed backward in its grooves 311. This is so that the folded middle and trailing sections 302, 303 are pushed back against the opening to the bypass passage in a sealing manner, while also allowing the leading portion 301 to be drawn fully back from the entrance to the normal heat exchanger passage to fully open that passage.

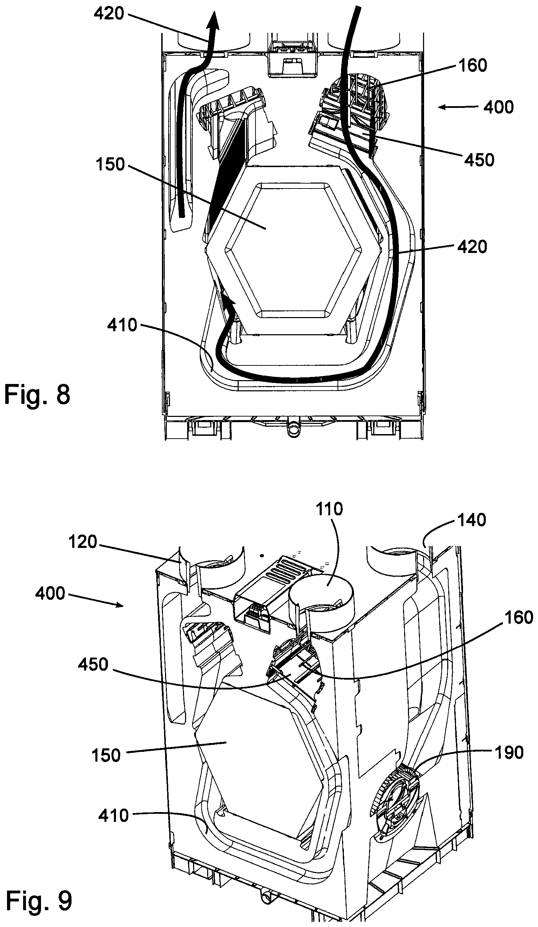

Figs. 8 and 9 show a second embodiment of the invention. Fig. 8 shows a partly cutaway view of a larger heat recovery unit 400 in which the bypass passage 410 is directed underneath the heat exchanger. The flow of air around the bypass passage 410 is indicated by arrow 420. Fig. 9 shows a cutaway view of the second embodiment from a different angle.

As in the first embodiment, the airflow through first inlet 110 first passes through first filter 160 before it reaches the barrier (air flow selector) 420 which is used to select the normal air flow passage or the bypass passage 410.

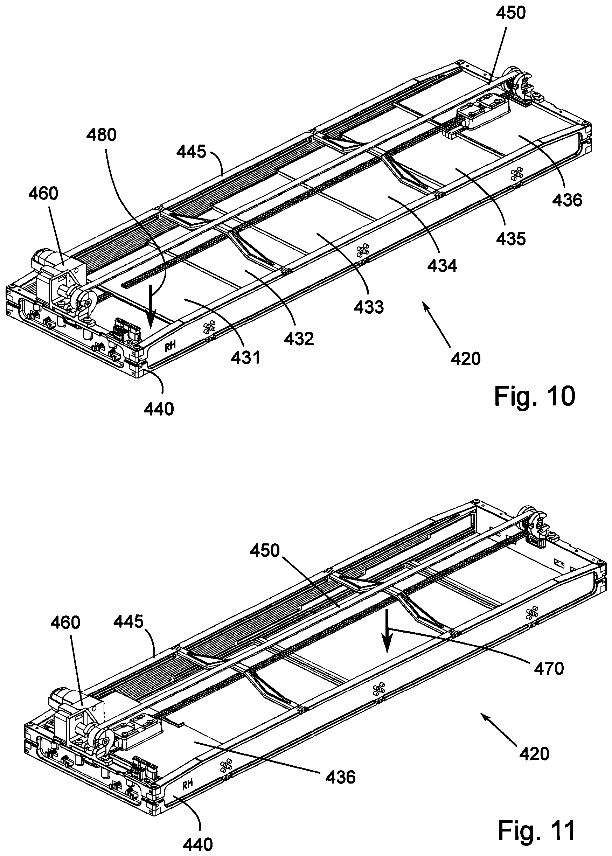

The barrier 420 in the second embodiment functions in a different manner to that of the first embodiment. Barrier 420 is shown in Figs. 10 and 11. In Fig. 10 the bypass path is open, while the normal heat exchanger flow path is closed. In Fig. 11 the bypass path is closed, while the normal heat exchanger flow path is open. Barrier 420 also comprises a number of sections 431-436, but none of them are foldable. Instead, all sections 431-436 are slidable in guide rails 440, 445.

The leading section 436 is attached to a toothed belt 450 which is driven by motor and gearing 460 to move leading section 436 back and forth in the guide rails 440, 445. Each section except the leading section 436 has an upwardly projecting lip on its leading edge which is caught by and pulled by a corresponding downwardly projecting lip on the trailing edge of the section in front of it. In this manner, as the leading section 436 is driven forward, the lip on its trailing edge catches the lip on the leading edge of section 435, pulling it forward. The lip on the trailing edge of section 435 then subsequently catches the lip on the leading edge of section 434, pulling that forward, and so on until trailing section 431 is pulled out last. In this extended configuration, all of the sections 431 to 436 overlap slightly and block the main flow path to the heat exchanger which is indicated by arrow 470 in Fig. 11. At the same time, moving trailing section 431 opens the summer bypass flow path which is indicated by arrow 480 in Fig. 10.

Each section except the trailing section 431 has a lip on its leading edge which catches and pulls the leading edge of the section behind it during retraction. In this manner, as leading section 436 is driven in the direction of retraction (right to left in Figs. 10 and 11), it catches and pulls section 435 with it, which in turn catches and pulls section 434 with it and so on until trailing section 431 is pulled back to the fully retracted position shown in Fig. 11. In this position, all of the sections 431 to 436 are stacked up over the entrance to the summer bypass air flow path 480, closing it off, while the main flow path 470 to the heat exchanger is fully open.

As in the first embodiment, the area of the main flow path 470 is much larger than the area of the bypass path 480 (in this case, six times as large) so as to provide less resistance for the path which has to go through the heat exchanger.

In the second embodiment, both the normal flow path 470 and the bypass flow path 480 head initially in the same direction, whereas in the first embodiment the two paths are at right angles.

## Claims

1. A heat recovery ventilation unit (100) comprising a first air flow path and a second air flow path and a heat exchanger (150) in which the first air flow path is in heat exchange contact with the second air flow path;
the unit further comprising an air flow path selector (300) in the first air flow path which is arranged to select between the first air flow path and a third air flow path which bypasses the heat exchanger (150);
wherein the air flow path selector (300) is located between an inlet filter of the first air flow path and the heat exchanger (150); **characterised in that**
the air flow path selector (300) comprises a barrier (300) which is movable between a first configuration in which air is directed to the heat exchanger (150) and a second configuration in which air is directed to bypass the heat exchanger (150), and **in that** the barrier (300) is operable to slide between the first configuration and the second configuration.

2. A heat recovery unit (100) as claimed in claim 1, wherein the heat recovery unit (100) comprises structures formed from plastic which form the third air flow path.

3. A heat recovery unit (100) as claimed in claim 1 or 2, wherein the barrier (300) is a foldable barrier (300) and wherein one of the first and second configurations is the folded state of the foldable barrier (300) and the other of the first and second configurations is the unfolded state of the foldable barrier (300).

4. A heat recovery unit (100) as claimed in claim 3, wherein the first configuration is the folded configuration and the second configuration is the unfolded configuration.

5. A heat recovery unit (100) as claimed in claim 3 or 4, wherein the foldable barrier (300) comprises a first section (301), a second section (302) and a third section (303), the first section (301) being foldably connected to the second section (302) and the second section (302) being foldably connected to the third section (303), and wherein in the folded configuration the fold between the first section (301) and the second section (302) is substantially a right angle and the fold between the second section (302) and the third section (303) is substantially 180 degrees so that the second and third sections (302, 303) are substantially parallel.

6. A heat recovery unit (100) as claimed in claim 5, wherein the barrier (300) is driven between the first and second configurations by an electric motor (308).

7. A heat recovery unit (100) as claimed in claim 1 or 2, wherein the barrier (420) comprises a plurality of sections (431-436), each slidable with respect to the others such that the sections are movable between an overlapped configuration and a non-overlapped configuration.

8. A heat recovery unit (100) as claimed in any preceding claim, wherein the heat recovery unit (100) is configurable such that either the first flow path or the second flow path is for incoming air.

## Patentansprüche

1. Wärmerückgewinnungs-Lüftungsgerät (100), umfassend einen ersten Luftdurchflussweg und einen zweiten Luftdurchflussweg und einen Wärmetauscher (150), in dem der erste Luftdurchflussweg in Wärmetauscherkontakt mit dem zweiten Luftdurchflussweg steht;
wobei das Gerät weiter eine Luftdurchflussweg-Auswahlvorrichtung (300) in dem ersten Luftdurchflussweg umfasst, die angeordnet ist, um zwischen dem ersten Luftdurchflussweg und einem dritten Luftdurchflussweg, der den Wärmetauscher (150) umgeht, auszuwählen;
wobei sich die Luftdurchflussweg-Auswahlvorrichtung (300) zwischen einem Eingangsfilter des ersten Luftdurchflusswegs und dem Wärmetauscher (150) befindet; **dadurch gekennzeichnet, dass**
die Luftdurchflussweg-Auswahlvorrichtung (300) eine Barriere (300) umfasst, die zwischen einer ersten Konfiguration, in welcher Luft an den Wärmetauscher (150) gerichtet wird, und einer zweiten Konfiguration, in welcher Luft gerichtet wird, um den Wärmetauscher (150) zu umgehen, beweglich ist, und dass die Barriere (300) funktionsfähig ist, um sich zwischen der ersten Konfiguration und der zweiten Konfiguration zu verschieben.

2. Wärmerückgewinnungsgerät (100) nach Anspruch 1, wobei das Wärmerückgewinnungsgerät (100) aus Kunststoff gebildete Strukturen umfasst, die den dritten Luftdurchflussweg bilden.

3. Wärmerückgewinnungsgerät (100) nach Anspruch 1 oder 2, wobei die Barriere (300) eine faltbare Barriere (300) ist und wobei eine von der ersten und der zweiten Konfiguration der gefaltete Zustand der faltbaren Barriere (300) ist und die andere von der ersten und der zweiten Konfiguration der nicht gefaltete Zustand der faltbaren Barriere (300) ist.

4. Wärmerückgewinnungsgerät (100) nach Anspruch 3, wobei die erste Konfiguration die gefaltete Konfiguration ist und die zweite Konfiguration die nicht gefaltete Konfiguration ist.

5. Wärmerückgewinnungsgerät (100) nach Anspruch 3 oder 4, wobei die faltbare Barriere (300) einen ersten Abschnitt (301), einen zweiten Abschnitt (302) und einen dritten Abschnitt (303) umfasst, wobei der erste Abschnitt (301) faltbar mit dem zweiten Abschnitt (302) verbunden ist und der zweite Abschnitt (302) faltbar mit dem dritten Abschnitt (303) verbunden ist, und wobei in der gefalteten Konfiguration die Faltung zwischen dem ersten Abschnitt (301) und dem zweiten Abschnitt (302) im Wesentlichen ein rechter Winkel ist und die Faltung zwischen dem zweiten Abschnitt (302) und dem dritten Abschnitt (303) im Wesentlichen 180 Grad beträgt, sodass der zweite und der dritte Abschnitt (302, 303) im Wesentlichen parallel sind.

6. Wärmerückgewinnungsgerät (100) nach Anspruch 5, wobei die Barriere (300) zwischen der ersten und der zweiten Konfiguration von einem Elektromotor (308) angetrieben ist.

7. Wärmerückgewinnungsgerät (100) nach Anspruch 1 oder 2, wobei die Barriere (420) eine Vielzahl von Abschnitten (431 - 436) umfasst, die jeweils bezüglich der anderen derart verschiebbar sind, dass die Abschnitte zwischen einer überlappenden Konfiguration und einer nicht überlappenden Konfiguration beweglich sind.

8. Wärmerückgewinnungsgerät (100) nach einem der vorstehenden Ansprüche, wobei das Wärmerückgewinnungsgerät (100) derart konfigurierbar ist, dass entweder der erste Luftdurchflussweg oder der zweite Luftdurchflussweg für Zuluft vorgesehen ist.

## Revendications

1. Unité de ventilation à récupération de chaleur (100) comprenant une première trajectoire de flux d'air et une deuxième trajectoire de flux d'air et un échangeur de chaleur (150) dans lequel la première trajectoire de flux d'air est en contact d'échange de chaleur avec la deuxième trajectoire de flux d'air ;
l'unité comprenant en outre un sélectionneur de trajectoire de flux d'air (300) dans la première trajectoire de flux d'air qui est agencé pour sélectionner entre la première trajectoire de flux d'air et une troisième trajectoire de flux d'air qui contourne l'échangeur de chaleur (150) ;
dans laquelle le sélectionneur de trajectoire de flux d'air (300) est situé entre un filtre d'entrée de la première trajectoire de flux d'air et l'échangeur de chaleur (150) ; **caractérisée en ce que**
le sélectionneur de trajectoire de flux d'air (300) comprend une barrière (300) qui est mobile entre une première configuration dans laquelle de l'air est dirigé vers l'échangeur de chaleur (150) et une seconde configuration dans laquelle de l'air est dirigé pour contourner l'échangeur de chaleur (150), et **en ce que** la barrière (300) est actionnable pour coulisser entre la première configuration et la seconde configuration.

2. Unité de récupération de chaleur (100) selon la revendication 1, dans laquelle l'unité de récupération de chaleur (100) comprend des structures formées de plastique qui forment la troisième trajectoire de flux d'air.

3. Unité de récupération de chaleur (100) selon la revendication 1 ou 2, dans laquelle la barrière (300) est une barrière pliable (300) et dans laquelle une des première et seconde configurations est l'état plié de la barrière pliable (300) et l'autre des première et seconde configurations est l'état déplié de la barrière pliable (300).

4. Unité de récupération de chaleur (100) selon la revendication 3, dans laquelle la première configuration est la configuration pliée et la seconde configuration est la configuration dépliée.

5. Unité de récupération de chaleur (100) selon la revendication 3 ou 4, dans laquelle la barrière pliable (300) comprend une première section (301), une deuxième section (302) et une troisième section (303), la première section (301) étant raccordée de manière pliable à la deuxième section (302) et la deuxième section (302) étant raccordée de manière pliable à la troisième section (303), et dans laquelle dans la configuration pliée, le pli entre la première section (301) et la deuxième section (302) est sensiblement un angle droit et le pli entre la deuxième section (302) et la troisième section (303) est sensiblement à 180 degrés de sorte que la deuxième et troisième sections (302, 303) soient sensiblement parallèles.

6. Unité de récupération de chaleur (100) selon la revendication 5, dans laquelle la barrière (300) est entraînée entre les première et deuxième configurations par un moteur électrique (308).

7. Unité de récupération de chaleur (100) selon la revendication 1 ou 2, dans laquelle la barrière (420) comprend une pluralité de sections (431-436), chacune étant coulissante par rapport aux autres de sorte que les sections soient mobiles entre une configuration recouverte et une configuration non recouverte.

8. Unité de récupération de chaleur (100) selon une quelconque revendication précédente, dans laquelle l'unité de récupération de chaleur (100) est configurable de sorte que la première trajectoire de flux ou la deuxième trajectoire de flux soit destinée à l'air entrant.
